# EUROPÄISCHE PATENTSCHRIFT

(11) **EP 1 411 260 B1**
(45) Veröffentlichungstag und Bekanntmachung des Hinweises auf die Patenterteilung: **19.01.2005**
(21) Anmeldenummer: 03022410.9
(22) Anmeldetag: 07.10.2003
(51) Int. Cl.: F16D 23/06

(54) **Schiebemuffe**
Sliding sleeve
Manchon coulissant

(30) Priorität: 15.10.2002 DE 10247953
(43) Veröffentlichungstag der Anmeldung: 21.04.2004
(73) Patentinhaber: INA-Schaeffler KG, 91074 Herzogenaurach (DE)
(72) Erfinder: Jansen, Manfred, 91085 Weisendorf (DE); Sassrath, Hans-Gerhardt, 91056 Erlangen (DE); Bössner, Ralf, 91217 Hersbruck (DE); Kalthoff, Ralph, 91054 Erlangen (DE); May, Kristina, 92237 Sulzbach-Rosenberg (DE); Spalthoff, Eberhard, 33615 Bielefeld (DE); Röckelein, Ernst, 96138 Burgebrach (DE); Badum, Thomas, 91315 Höchstadt (DE)

(56) Entgegenhaltungen:
- DE-A- 10 018 093
- DE-A- 10 018 094
- DE-A- 10 033 764
- DE-A- 19 912 133
- US-A- 3 894 619

## Beschreibung

### Gebiet der Erfindung

Die Erfindung betrifft eine Schiebemuffe mit einer durch Kaltumformen hergestellten Verzahnung an einem dünnwandigen hohlzylindrischen Körper aus Blech und mit einer Schaltgabelführung, wobei der Körper ein inneres Umfangsprofil mit radial nach innen in Richtung einer Rotationsachse der Schiebemuffe hervorstehenden Zähnen der Verzahnung und ein durch das innere Umfangsprofil vorgegebenes äußeres Umfangsprofil aufweist und wobei die Schaltgabelführung mit einer außerhalb des Körpers um die Rotationsachse umlaufenden sowie seitlichen begrenzten Ringnut versehen ist.

### Hintergrund der Erfindung

Eine derartige Schiebemuffe ist in DE100 18 094 A1 sowie in DE100 18 093 A1 beschrieben. Die Schiebemuffe weist eine Verzahnung mit radial nach innen auf die Rotationsachse der Schiebemuffe gerichteten Zähnen auf. Die Verzahnung der Schiebemuffe ist aus einem in der Regel dünnwandigem Blechstreifen gebildet, der in seinem Ausgangszustand flach mit rechteckigem Querschnitt vorliegt. In den Blechstreifen ist im flachen Zustand das Profil der Verzahnung kalt gewalzt bzw. geprägt, wobei der Blechstreifen an beiden der flachen Seiten des Blechstreifens profiliert ist. Der Blechstreifen ist nach dem Profilieren, entlang seiner Längsachse um eine Rotationsachse kreisrund gebogen sowie dabei an seinen Schnittkanten zusammengeführt. Die Rotationsachse ist die Rotationsachse der fertigen Schiebemuffe. Die Schnittkanten sind dann aneinander befestigt, so dass ein umfangsseitig geschlossener und belastbarer innen und außen mit je einem Umfangsprofil versehener hohlzylindrischer Körper entsteht. Die Enden des Blechstreifens sind in der Regel miteinander verschweißt. Die Verbindung der Schnittkanten ist aufgrund der in der Synchronkupplung zu übertragenden Drehmomente hoch belastet. Der Aufwand für das Herstellen einer sicheren Verbindung ist deshalb hoch.

Es ist weiter bekannt, dass derartig mit Verzahnungen versehene hohlzylindrische Körper aus einem dünnwandigen umfangsseitig geschlossenen Hohlzylinder herstellbar sind. Die Verzahnung, und damit das innere sowie das äußere Umfangsprofil ist in die Hohlzylinder mittels profilierter Walzen und profilierter Dorne eingebracht.

Die Verzahnung weist in der Regel die bekannten Merkmale einer Verzahnung an Schiebemuffen, wie dachartig angespitzte Zähne, hinterschnittene Zahnflanken, radiale Rastvertiefungen oder Ähnliches auf. Unter Verzahnung und Zähnen sind in der Erfindung alle Arten und Ausführungen von Keilen, Keilprofilen, Klauen, Kerbverzahnungen usw. zu verstehen, die für eine formschlüssige Verbindung zum Übertragen von Drehmomenten geeignet sind und die zur Vereinfachung der Beschreibung unter dem Begriff Verzahnung zusammengefasst sind. Dabei sind die Flanken der Zähne längs mit der Rotationsachse des hohlzylindrischen Körpers ausgerichtet, wobei die Rotationsachse des Körpers mit der Verzahnung der Rotationsachse der Schiebemuffe entspricht.

Sowohl jeweils das innere als auch das äußere Umfangsprofil an dem hohlzylindrischen Körper ist mit Profilerhöhungen und Profilvertiefungen versehen. Die Profilerhöhungen an dem inneren Umfangsprofil sind durch die einzelnen Zähne der Verzahnung der Schiebemuffe gebildet und die Profilvertiefungen an dem inneren Umfangsprofil sind die Zahnlücken zwischen den in Umfangsrichtung zueinander benachbarten Zähnen der Verzahnung. Das äußere Umfangsprofil ist, durch das Umformen des Bleches bedingt, durch die Form des inneren Umfangsprofils vorgegeben. Wenn, wie in dem Beispiel nach DE 100 18 094, das Blech des Profils im Querschnitt betrachtet "wellenförmig" verlaufend geformt ist, ist jede der Profilvertiefungen des äußeren Umfangsprofils in einem Zahn der Innenverzahnung ausgebildet. Jede Profilerhöhung des äußeren Umfangsprofils begrenzt dabei eine der Zahnlücken zwischen den Zähnen der Schiebemuffe nach außen. Wenn alternativ dazu, an dem hohlzylindrischen Körper mit einem inneren- als auch äußeren Umfangsprofil, die Zähne der Verzahnung des Innenprofils im Querschnitt gesehen nahezu vollständig oder vollständig mit dem Material des Bleches ausgefüllt sind, schließt sich an die Zahnlücken des inneren Umfangsprofils radial nach außen eine Profilerhöhung des äußeren Umfangsprofils an. Diese Profilerhöhung ist dann ebenfalls von dem Material des Bleches ausgefüllt. Der Profilvertiefung des äußeren Umfangsprofils folgt dann radial nach innen ein mit dem Material des Bleches ausgefüllte Zahn.

Die Schaltgabelführung ist mit einer um die Rotationsachse verlaufenden und beidseitig längs der Rotationsachse begrenzten Ringnut versehen. Die Ringnut ist nach dem Stand der Technik durch die Flanken von zwei längs der Rotationsachse mit Abstand sowie parallel zueinander und außen auf der Verzahnung befestigten Lochscheiben begrenzt.

Die Schiebemuffe ist als ein Kupplungselement in einer Schaltkupplung eines Schaltgetriebes eingesetzt. Mit der Schiebemuffe ist eine Drehmomente- bzw. Leistungsflüsse übertragende Verbindung zwischen zwei durch die Schiebemuffe kuppelbaren Getriebeelementen herstellbar. Dazu sitzt die Schiebemuffe beispielsweise auf einem der Fachwelt bekannten Muffenträger einer Schaltkupplung mit den üblicherweise verwendeten Einfach- oder Mehrfach-Synchronisiereinheiten. Wenn ein Gangrad geschaltet ist, greift die Schaltmuffe zeitgleich mit einem Anteil des Zahnprofils in eine Verzahnung des Muffenträgers sowie mit einem weiteren Anteil in eine mit dem Gangrad drehfest gekoppelte Kupplungsverzahnung ein und überträgt somit den Leistungsfluss zwischen der Getriebewelle und dem Zahnrad. Die dabei durch die Schiebemuffe zu übertragenden Drehmomente werden an den ineinandergreifenden Zähnen der miteinander gekoppelten Getriebeelemente in Kräfte umgesetzt. Jeder der Zähne des Zahnprofils ist mit seinen Flanken längs zu der Drehachse ausgerichtet und weist jeweils einen Anteil auf, der in eine Lücke der Kupplungsverzahnung eingreift, einen anderen Anteil der ohne verzahnenden Kontakt den Abstand längs zwischen dem Muffenträger und der Kupplungsverzahnung überbrückt und einen weiteren Anteil, der in eine Zahnlücke an dem Muffenträger eingreift. Die zwischen dem Muffenträger und der Kupplungsverzahnung übertragenen Momente an den beiden in die Gegenverzahnungen eingreifenden der Anteile der Verzahnung führen zu elastischen Verformungen an der Schiebemuffe, die auf Dauer die Funktion der Synchronkupplung negativ beeinflussen könnten.

Die Fachwelt ist in der Regel bemüht, ein Getriebe und damit seine Einzelteile so klein und leicht wie möglich zu bauen. Aus diesem Grund wurden Schiebemuffen der gattungsbildenden Art eingeführt. Die Schiebemuffe ist aufgrund des dünnwandigen Bleches der Verzahnung relativ leicht. Der Aufwand für die Herstellung einer derartigen Schiebemuffe, insbesondere der Materialverbrauch ist gering. Allerdings muss die Schiebemuffe aufgrund der oben erwähnten Belastungen wiederum sehr solide ausgebildet sein. So ist z.B. die Verbindung der Enden des Blechstreifens besonders gefährdet. Insbesondere die Spannungen in dem profilierten Hohlkörper aus der elastischen Verlagerung der Zahnköpfe der beiden in Umfangsrichtung zur Verbindung benachbarten Zähne des Zahnprofils, zusammen mit den in Umfangsrichtung in der Basis verlaufenden Hauptspannungen und den daraus entstehenden und schon anfangs erwähnten Verformungen, können bei einer zu geringen Wandstärke des Bleches zum Aufbrechen der Verbindung an dem Anteil des Zahnprofils führen, der in die Kupplungsverzahnung eingreift. Das Blech der nicht mit Material ausgefüllten Zähne muss deshalb Wandstärken aufweisen, deren Material massiv genug ist, um das Verschieben der Zahnköpfe weitestgehend zu vermeiden und um die Spannungen auf ein erträgliches Maß zu reduzieren. Die Zähne und damit die Schiebemuffe sind deshalb auf Grund des dickeren Bleches entweder an sich überdimensioniert oder die Schiebemuffen sind für Anwendungen, in denen hohe Drehmomente übertragen werden müssen, nur begrenzt geeignet.

### Zusammenfassung der Erfindung

Die Aufgabe der Erfindung ist es daher, eine robuste und kostengünstig herstellbare Schiebemuffe mit einer Verzahnung an einem beidseitig profilierten hohlzylindrischen Körper zu schaffen, mit der die vorher beschriebenen Nachteile des Standes der Technik vermieden sind.

Diese Aufgabe ist nach dem Gegenstand des kennzeichnenden Teils des Anspruchs 1 dadurch gelöst, dass die Schiebemuffe einen einteiligen sowie umfangsseitig geschlossenen Stützring aus Stahl aufweist. Der Stützring ist auf dem mit der Verzahnung profilierten hohlzylindrischen Körper befestigt. Dabei ist der Körper mittels eines ringförmigen Abschnittes des Stützringes mit einer konstanten Wanddicke außen zu mindestens zu 4/5 längs der Rotationsachse abgedeckt sowie umfangsseitig vollständig umgriffen. Der hohlzylindrische Abschnitt ist außen zumindest durch eine zylindrische Mantelfläche begrenzt.. Innen umgreift der ringförmige Abschnitt das äußere Umfangsprofil. Mit einer Ausgestaltung der Erfindung ist vorgesehen, dass die Wanddicke des ringförmigen Abschnitts mindestens der Zahnhöhe eines der Zähne der Verzahnung entspricht, wobei die Zahnhöhe die halbe Differenz aus dem größten Durchmesser des Fußkreises und aus dem kleinsten Durchmesser des Kopfkreises der höchsten Zähne der Verzahnung ist. Der Stützring ist entweder ein zu der Schaltgabelführung separates Teil oder der Stützring ist einteilig mit der Schaltgabelführung ausgebildet. So ist mit einer weiteren Ausgestaltung der Erfindung vorgesehen, dass die Schaltgabelführung eine in den Stützring geformte sowie radial nach außen geöffnete Ringnut ist.

Die Verzahnung ist mittels des am Umfang geschlossen ausgeführten Stützringes bandagiert und stützt sich unter hohen Belastungen an diesem ab. Dazu weist der Stützring den ringförmigen Abschnitt auf, der die Verzahnung an dem hohlzylindrischen Körper zu mindestens 4/5 bandagenartig umgreift. Dem einteilig mit der Schaltgabel ausgebildeten Abschnitt schließt sich radial außen wenigstens ein zumeist rotationssymmetrisch ausgebildeter Wandabschnitt des Stützringes an, in den die Ringnut für die Schaltgabelführung eingebracht ist. Das sich längs der Ringnut anschließende und sich längs vorzugsweise bis zu den Stirnseiten der Verzahnung erstreckende Material des Stützringes unterstützt die Stützwirkung. Es ist für den einteilig mit der Schaltgabelführung ausgebildeten Stützring vorzugsweise vorgesehen, dass radial zwischen der Ringnut der Schaltgabelführung ein ringförmiger Abschnitt mit einer Wanddicke von mindestens 2,5 mm an dem Stützring verbleibt. Weiter ist vorzugsweise vorgesehen, dass der ringförmige Abschnitt an dem Stützring eine Wanddicke aufweist, die mindestens dem 2-fachen Wert der geringsten Blechdicke des Bleches des hohlzylindrischen Körpers in seinem Ausgangszustand vor dem Profilieren ist. Mit derartigen Verhältnissen der Wandstärken bzw. Wanddicken zueinander, ist eine Stützwirkung des Stützringes über die gesamte Breite des Stützringes abgesichert, ohne dass diese Wirkung durch die in den Stützring eingebrachte Ringnut an dem Abschnitt geschwächt ist.

Die Schiebemuffe gemäß Erfindung ist sehr kompakt ausgeführt. Es sind Schiebemuffen mit kleinen Außendurchmessern und hoher Stabilität herstellbar, da ein Großteil des stützenden Materials des Stützringes sich längs an die Ringnut anschließt und somit, verglichen mit dem bisherigen Stand der Technik kaum oder nur geringfügig mehr radialer Bauraum durch die Schiebemuffe beansprucht ist. Bleche mit geringer Blechdicke sind für die Herstellung der Verzahnung einsetzbar.

Die Verzahnung ist in den Stützring eingepresst oder alternativ eingelegt und dabei mit dem Stützring verschweißt. Der Presssitz ist alternativ durch Schweißen oder Verstemmen der Teile aneinander gesichert. Die Schweißnaht bzw. die Schweißnähte der Schweißverbindung(en) verlaufen bevorzugt in Umfangsrichtung umlaufend sowie vorzugsweise an einer oder an beiden in die Längsrichtung(en) der Rotationsachse gewandte(n) Stirnseite(n) der Schiebemuffe. Die Schweißverbindungen sind Verbindungen aus der Anwendung aller geeigneten Schweißverfahren, jedoch insbesondere aus der Anwendung des Laserschweißens und des Kondensator-Entladungsschweißens.

Schließlich ist mit einer Ausgestaltung der Erfindung vorgesehen, dass der hohlzylindrische Körper aus einem kreisrund gebogenen Blechstreifen gebildet ist, wobei der Blechstreifen in einem flachen Ausgangszustand so profiliert ist, dass der kreisrund um die Rotationsachse gebogene Blechstreifen das innere und das äußere Umfangsprofil aufweist. Die Verbindung der aufeinander zu gebogenen Enden an den Schnittkanten des Blechstreifens ist tangential oder in Umfangsrichtung entlastet. Dazu sind die Enden des Blechstreifens vorzugsweise mittels Fügetechniken wie durch den Kraft-Formschluss in einer oder mehrerer sogenannter Schlossverbindung(en) oder Schweißverbindung(en) bzw. mittels Kombinationen dieser Techniken aneinander befestigt. Die Schlossverbindung ist durch das tangentiale bzw. umfangsseitige Einhaken formschlüssig miteinander korrespondierender Elemente an den Enden des Blechstreifens gebildet (z. B. in der Form einer Schwalbenschwanzverbindung). Diese Verbindungen sind ggf. durch Prägungen oder Verstemmen bzw. durch Schweißen gesichert. Derartige Verbindungen entfallen alternativ dazu ganz. Der kreisrund gebogene Blechstreifen mit der Verzahnung ist in diesem Fall in den Stützring eingepresst, eingelegt und/oder mit dem Stützring verschweißt bzw. verstemmt, ohne dass die aufeinander zu gebogenen Enden des Stützringes vorher aneinander befestigt sind. Die Enden liegen nur auf Stoß aneinander. Die Werkzeuge für den Zuschnitt des Blechstreifens sind vereinfacht, der Arbeitsgang des Verbindens der Enden entfällt in diesem Fall generell.

Der Stützring ist ein Umformteil, das kalt umgeformt, vorzugsweise durch Walzen oder Rollieren, hergestellt ist. Vor dem Umformen sind die kalt zu bearbeitenden Rohlinge maximal auf eine Temperatur bis zu 120°C erwärmt. Der Rohling, aus dem der Ring mit einer Schaltgabelführung gewalzt ist, ist bevorzugt ein Schmiederohling. Nach dem Formen ist jede der die Ringnut der Schaltgabelführung begrenzenden Seitenwand um einen Winkel von 2° bis 3° von einer radialen und der Symmetrieebene der Ringnut gleichen oder parallelen Eben seitlich zur Stirnseite der Schiebemuffe weg geneigt, d. h. der Querschnitt der Ringnut nimmt im Längsschnitt der Schiebemuffe betrachtet in radiale Richtung nach außen zu. Diese Schrägstellung der Wände verbleibt an der fertigen Schiebemuffe und trägt ggf. zu einer sinnvollen Führung und Zentrierung der in die Ringnut eingreifenden Enden der Schaltgabeln bei. Alternativ dazu sind die Wände so spanabhebend nachgearbeitet, dass sie zueinander parallel ausgerichtet sind.

Die Rohlinge sind bevorzugt aus Stahl mit den Werkstoffbezeichnungen C15, 100Cr6 oder 16MnCr5 hergestellt. Alternativ dazu sind alle kaltumformbaren Stähle einsetzbar. Eine Ausgestaltung der Erfindung sieht vor, dass der Rohling ringförmig ausgebildet ist und dass der größte, die Außenmantelfläche des Rohlings beschreibende, Außendurchmesser an dem Rohling kleiner ist als der größte Außendurchmesser der Außenmantelfläche des aus dem Rohling hergestellten fertigen Stützringes.

Der zunächst kalt gewalzte Ring ist ggf. im Anschluss an den Formprozess an seiner nach innen weisenden zylindrischen Mantelfläche durch spanabhebende Verfahren oder durch Kalibrieren passgenau für den Sitz auf der Verzahnung bearbeitet.

Die Verschleißfestigkeit der Schiebemuffe ist durch Härten oder Nitrocarburieren erhöht. Die Einzelteile der Schiebemuffe sind getrennt gehärtet oder die Schiebemuffe ist komplett gehärtet. Dabei sind sowohl Verfahren zum Durchhärten als auch zum Einsatzhärten einsetzbar. Alternativ dazu ist an der Schaltgabelführung nur die Ringnut für den Eingriff der Schaltgabel, z. B. durch Induktionshärten, gehärtet. Das weitere Material der Schaltgabelführung ist dann nicht gehärtet. Die gesamte Führung ist somit formstabil gehalten. Die Ringnut ist entweder vor oder nach dem Härten durch spanabhebende Nacharbeit oder Kalibrieren auf Maß gebracht. Die Schiebemuffe innen und auch außen, insbesondere die Ringnut der Schaltgabelführung, ist alternativ durch Hartdrehen nach dem Härten der Führung bzw. der Schiebemuffe bearbeitet.

Die Schiebemuffe ist durch Fügen der Einzelteile der Schaltgabelführung und ggf. dem anschließenden Härten im wesentlichen fertiggestellt. Alternativ dazu ist vorgesehen, dass die Zähne der Verzahnung an der Schiebemuffe nach dem Befestigen der Schaltgabelführung auf der Verzahnung durch Kalibrieren und dabei unter Umständen auch nach dem Härten maßgenau zueinander ausgerichtet sind.

### Kurze Beschreibung der Zeichnungen

Die Erfindung ist nachfolgend anhand von mehreren Ausführungsbeispielen näher erläutert. Es zeigen:
- Figur 1: die Hauptansicht einer erfindungsgemäßen Schiebemuffe mit einer Verzahnung an einem dünnwandigen, profilierten und hohlzylindrischen Körper aus Blech und einem Stützring,
- Figur 1a: den hohlzylindrischen Körper der Schiebemuffe aus Figur 1,
- Figur 1b: ein Beispiel eines mit einer Verzahnung profilierten Blechstreifens im gestreckten Ausgangszustand,
- Figuren 2a bis 2c: alternative Ausführungen der Profilierungen an einem Blechstreifen nach Figur 1b,
- Figuren 3a bis 3e: einen Längsschnitt durch die Schiebemuffe nach Figur 1 entlang der Linie III-III mit alternativ gestalteten Stützringen und
- Figur 4: die zeichnerische Gegenüberstellung der Größenverhältnisse an einem fertigen Stützring im Vergleich zu den Abmessungen des Rohlinges für die Herstellung des Stützringes.

### Detaillierte Beschreibung der Zeichnungen

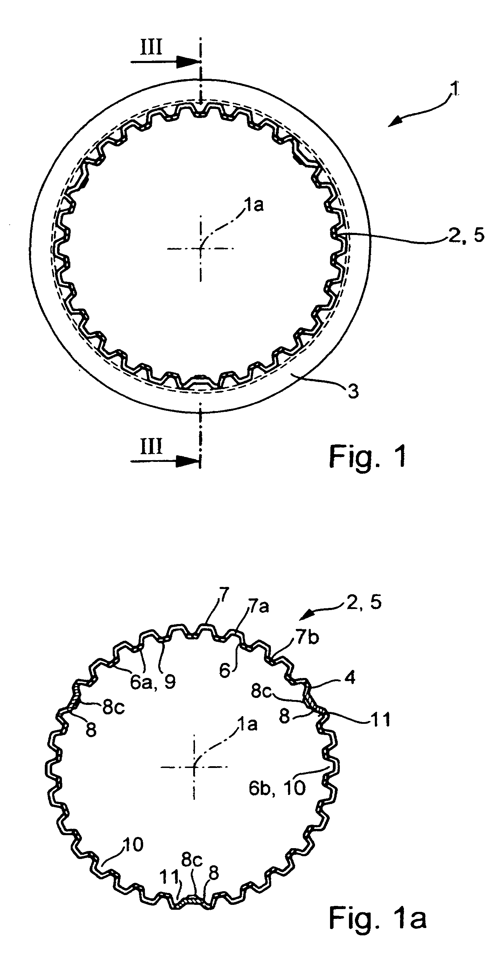

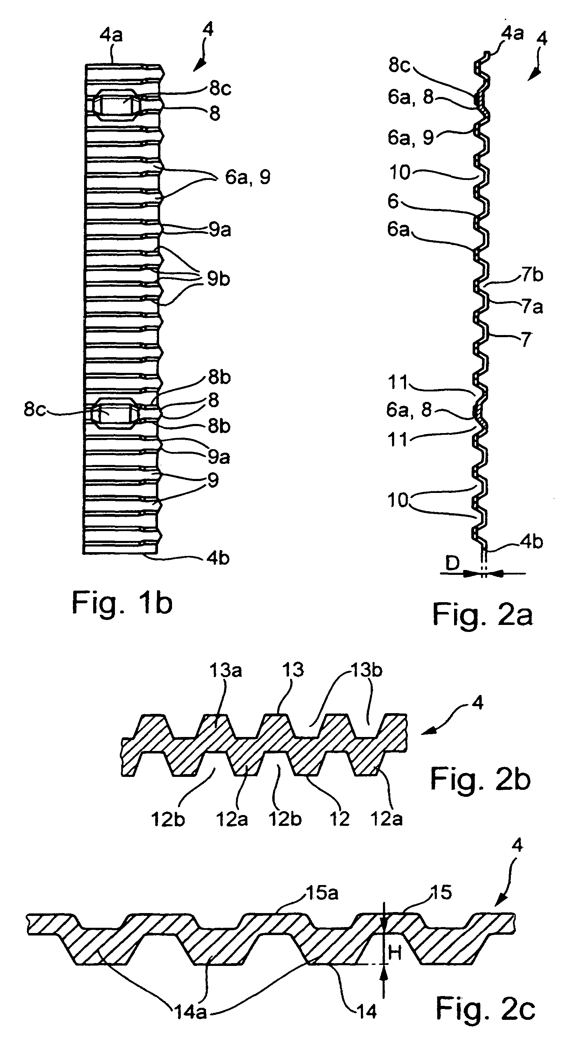

Figur zeigt eine Schiebemuffe 1. Die Schiebemuffe 1 ist im wesentlichen um die Rotationsachse 1a rotationssymmetrisch ausgebildet und besteht aus einer Verzahnung 2 sowie einem Stützring 3. Die Verzahnung 2 an einem hohlzylindrischen Körper 5 ist in Figur 1a ohne den Stützring dargestellt und entweder in einem dünnwandigen Hohlzylinder aus Blech eingebracht oder aus einem ringförmig gebogenen Blechstreifen 4 gebildet. Ein verkürzt dargestelltes Ausführungsbeispiel des Blechstreifens 4 der Blechdicke D ist in Figur 1b und 2a dargestellt. Der Blechstreifen 4 liegt zunächst, nachdem der Blechstreifen 4 im gestreckten Zustand profiliert wurde, in gestreckter Form vor. Die Blechdicke D entspricht an dem Blechstreifen 4 im wesentlichen der Dicke des Blechstreifens 4 vor dem Profilieren oder ist geringfügig dünner. Der Blechstreifen 4 ist im Anschluss an das Profilieren ringförmig um die Rotationsachse 1a zu dem in Figur 1a dargestellten hohlzylindrischen Körper 5 gebogen, wobei die Enden 4a und 4b des Blechstreifens 4 aufeinander zu gebogen und aneinander befestigt sind.

Der hohlzylindrische Körper 5 weist ein inneres Umfangsprofil 6 und ein äußeres Umfangsprofil 7 auf. Das innere Umfangsprofil 6 ist mit Profilerhöhungen 6a versehen, die an dem Körper 5 die Zähne 8 und 9 der Verzahnung 2 bilden. Profilvertiefungen 6b bilden an dem Körper 5 die Zahnlücken 10 und 11 der in Umfangsrichtung der Schiebemuffe 1 zueinander benachbarten Zähne 8 bzw. 8 und 9. Das äußere Umfangsprofil 7 ist durch die Formgebung des inneren Profils 6 vorgegeben. So begrenzen die Profilerhöhungen 7a des äußeren Umfangsprofils 7 die Profilvertiefungen 6b des inneren Umfangsprofils 6. Die Profilvertiefungen 7b des äußeren Umfangsprofils 7 sind durch die Profilerhöhungen 6a des inneren Umfangsprofils 6 begrenzt.

Die Figuren 2b und 2c zeigen vereinfacht und nicht maßstäblich dargestellte mögliche Alternativen der Gestaltung des Blechstreifens 4. Ein inneres Umfangsprofil 12 nach Figur 2b weist Profilerhöhungen 12a auf, die von dem Material des Blechstreifens 4 vollständig ausgefüllt sind und die an einem nicht dargestellten sowie dem Körper 5 ähnlichen hohlzylindrischen Körper die radial nach innen auf die Rotationsachse 1a gerichteten Zähne bilden. Die Profilvertiefungen 12b bilden an dem Körper die Zahnlücken. An jede der Profilvertiefungen schließt sich außen eine Profilerhöhung 13a eines äußeren Umfangsprofils 13 an. Die Profilerhöhungen 13a sind ebenfalls von dem Material des Blechstreifens 4 vollständig ausgefüllt und begrenzen an dem Körper die Zahnlücken der Verzahnung nach außen. Der Profilvertiefung 13b folgt dann radial innen an einem hohlzylindrischen Körper ein durch die Profilerhöhungen 12a vorgegebener Zahn der Verzahnung einer Schiebemuffe. Ein mit den Profilen 12 und 13 versehener Körper weist ein hohes Widerstandsmoment gegen Verwindung der Verzahnung einer Schiebemuffe auf. Die vollständig mit Material ausgefüllten Zähne sind für das Härten mit höheren Härtetiefen beim Einsatzhärten und für das Durchhärten geeignet und somit besonders für Verzahnungen geeignet, an denen die Kontaktpressung beim Übertragen von Drehmomenten in einer Synchronkupplung relativ hoch sind.

Eine Verzahnung mit den Profilen 14 und 15 nach Figur 2c ist insbesondere für Anwendungen geeignet, in denen sehr hohe Drehmomente durch eine Schiebemuffe 1 in einer nicht dargestellten Synchronkupplung übertragen werden müssen. Die Zähne der durch die Profile 14 und 15 vorgegebenen Verzahnung sind sehr massiv und mit Material ausgefüllt. Dazu weist das innere Umfangsprofil 14 Profilerhöhungen 14a auf, deren Höhe H zumindest der Blechdicke D des Blechstreifens 4 in seinem flachen Ausgangszustand entspricht. Nahezu das gesamte Material aus dem Blechstreifen ist durch das Umformen in die Profilerhöhungen 14a verdrängt. Es verbleibt eine relativ schmale Verbindung zwischen den Wurzeln der Profilerhöhungen, die durch die Profilerhöhungen 15a des äußeren Umfangsprofils 15 gebildet sind. An der fertigen Schiebemuffe 1 ist jede einzelne einen Zahn der Verzahnung bildende Profilerhöhung 14a über die Profilerhöhungen 15a fest, zum Beispiel durch Schweißverbindungen, mit dem Stützring 3 verbunden. Die vollständig mit Material ausgefüllten Zähne sind, ebenso wie bei der Ausführung nach Figur 2b, für das Härten mit höheren Härtetiefen beim Einsatzhärten und für das Durchhärten geeignet.

Die durch die Profilerhöhungen 6a, 12a, 14a vorgegebenen Zähne 8 und 9 sind mit den üblichen Merkmalen der Zähne von Schiebemuffen, wie Dachschrägen 8a, 9a und hinterschnittene Zahnflanken 8b, 9b versehen. Jeder der Zähne 8 weist eine Rastvertiefung 8c für den Eingriff eines nicht dargestellten Druckstückes auf.

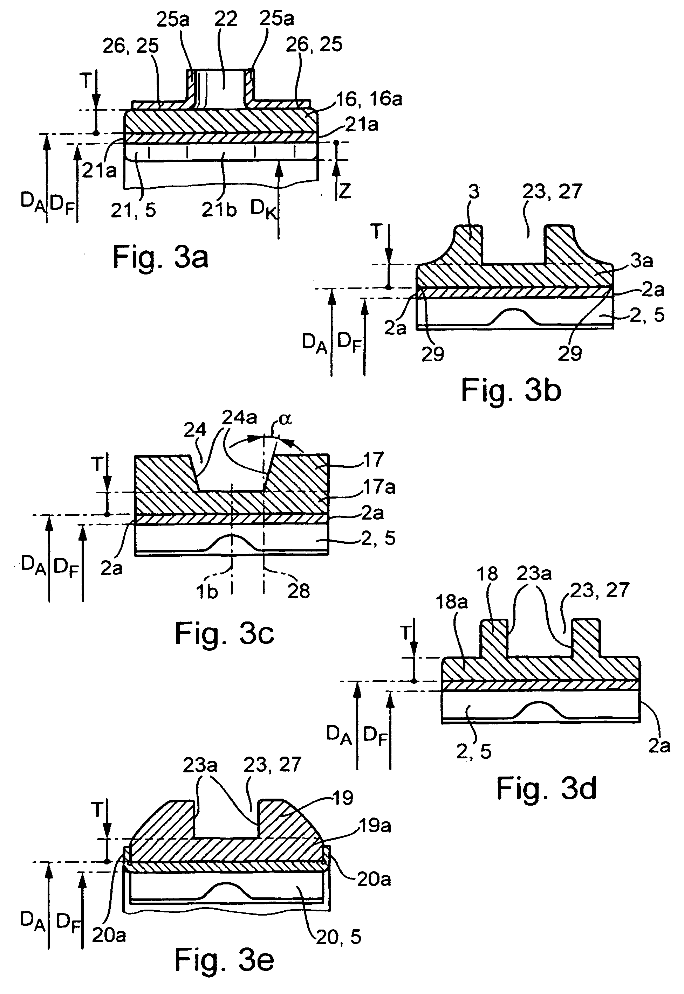

Die Figuren 3a bis 3e zeigen einen vergrößerten und nicht maßstäblich dargestellten Querschnitt durch die Schiebemuffe 1, wobei unterschiedliche Ausführungsformen von Stützringen 3, 16, 17,18 und 19 und teils unterschiedliche Ausführungen von Verzahnungen 2 , 20 oder 21 dargestellt sind. Jeder der Stützringe 3, 16, 17,18 und 19 weist einen ringförmigen Abschnitt 3a, 16a, 17a, 18a und 19a der Wanddicke T auf, wobei der Stützring 16 nur aus dem ringförmigen Abschnitt 16a besteht. Jeder der Abschnitte 3a, 16a, 17a, 18a schließt jeweils stirnseitig, längs in beide Richtungen der Rotationsachse 1a, mit jeweils einer Stirnseite 2a bzw. 21 a der Verzahnung 2 ab. Damit ist die Verzahnung 2, 21 von außen umfangsseitig und längs der Rotationsachse durch einen der Stützringe 3, 16, 17 und 18 vollständig abgedeckt. Der ringförmige Abschnitt 19a ist seitlich zumindest teilweise durch radial nach außen von der Verzahnung 20 abgehende Borde 20a eingefasst. Außen begrenzen die Abschnitte 3a, 16a, 17a, 18a und 19a den Grund jeweils einer Ringnut 22, 23 oder 24. Innen ist jeder der Abschnitte 3a, 16a, 17a, 18a und 19a durch den äußeren Durchmesser D_{A} der Verzahnung 2, 20 oder 21 bzw. des Körpers 5 begrenzt.

Die radiale Wanddicke T der Abschnitte 3a, 16a, 17a, 18a und 19a entspricht mindestens dem Doppelten der Blechdicke des hohlzylindrischen Körpers 5 in seinem Ausgangszustand und ist zum Beispiel mindestens zweimal so groß, wie die Blechdicke D des Blechstreifens 4. Der radial zwischen der Ringnut 22 und dem Körper 5 gelegene Abschnitt 16a des Stützringes 16 weist eine radiale Wanddicke von mindestens 2,5 mm auf. Die Wanddicke T entspricht dabei mindestens der Zahnhöhe Z des eines Zahnes 21 b der Verzahnung 21. Die Zahnhöhe Z ist die halbe Differenz des größten Durchmesser D_{F} des Fußkreises und aus dem kleinsten Durchmesser D_{K} des Kopfkreises.

Auf dem Stützring 16 sitzt eine Schaltgabelführung 26, die aus zwei Winkelringen 25 gebildet ist. Jeder der Winkelringe 25 weist einen radial von dem Stützring 16 abgehenden Schenkel 25a auf. Die Schenkel 25a sind längs des Stützringes beabstandet zueinander angeordnet sowie parallel zueinander ausgerichtet und begrenzen somit die Ringnut 22 seitlich. Die Stützringe 3, 18 und 19 sind mit einer Schaltgabelführung 27 in Form der Ringnut 23 versehen. Der Stützring 17 weist die Ringnut 24 auf. Die Seitenwände 23a der Ringnut 23 sind parallel zueinander ausgerichtet, während die Seitenwände 24a der Ringnut 24 jeweils um den Winkel α zu jeweils einer der Symmetrieebene 1b der Schiebemuffe 1 bzw. der Ringnut 24 parallelen Ebene 28 geneigt sind. Die Ringnuten 22, 23 und 24 sind in den jeweiligen der kalt gewalzten Stützringe 3, 17, 18 und 19 gewalzt.

Der Stützring 3 ist mittels eines Presssitzes auf dem hohlzylindrischen Körper 5 befestigt. Zusätzlich sind der Stützring 3 und die Verzahnung 2 mittels zwei umlaufender Schweißnähte 29 aneinander gesichert.

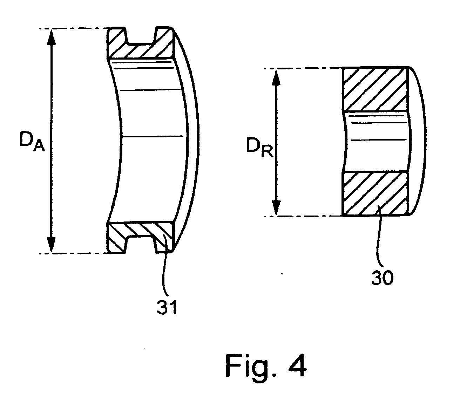

Figur 4 zeigt in vereinfachter Form die Abmessungen eines Rohlings 30 für die Herstellung eines Stützringes 31 im Vergleich zu den Abmessungen des fertigen Stützringes 31. Der größte Außendurchmesser D_{R} des Rohlings 30 ist kleiner als der größte Außendurchmesser D_{A} des Stützringes 31.

### Bezugszeichen

- 1: Schiebemuffe
- 1 a: Rotationsachse
- 2: Verzahnung
- 2a: Stirnseite
- 3: Stützring
- 3a: Abschnitt
- 4: Blechstreifen
- 4a: Ende
- 4b: Ende
- 5: Körper
- 6: inneres Umfangsprofil
- 6a: Profilerhöhung
- 6b: Profilvertiefung
- 7: äußeres Umfangsprofil
- 7a: Profilerhöhung
- 7b: Profilvertiefung
- 8: Zahn
- 8a: Dachschräge
- 8b: Zahnflanke
- 8c: Rastvertiefung
- 9: Zahn
- 9a: Dachschräge
- 9b: Zahnflanke
- 10: Zahnlücke
- 11: Zahnlücke
- 12: inneres Umfangsprofil
- 12a: Profilerhöhung
- 12b: Profilvertiefung
- 13: äußeres Umfangsprofil
- 13a: Profilerhöhung
- 13b: Profilvertiefung
- 14: inneres Umfangsprofil
- 14a: Profilerhöhung
- 14b: Profilvertiefung
- 15: äußeres Umfangsprofil
- 15a: Profilerhöhung
- 16: Stützring
- 16a: Abschnitt
- 17: Stützring
- 17a: Abschnitt
- 18: Stützring
- 18a: Abschnitt
- 19: Stützring
- 19a: Abschnitt
- 20: Verzahnung
- 20a: Bord
- 21: Verzahnung
- 21 a: Stirnseite
- 21 b: Zahn
- 22: Ringnut
- 23: Ringnut
- 23a: Seitenwand
- 24: Ringnut
- 24a: Seitenwand
- 25: Winkelring
- 25a: Schenkel
- 26: Schaltgabelführung
- 27: Schaltgabelführung
- 28: Ebene
- 29: Schweißnaht
- 30: Rohling
- 31: Stützring

## Patentansprüche

1. Schiebemuffe (1) mit einer durch Kaltumformen hergestellten Verzahnung (2, 20, 21) an einem dünnwandigen hohlzylindrischen Körper (5) aus Blech und mit einer Schaltgabelführung (26, 27), wobei der Körper (5) ein inneres Umfangsprofil (6, 12, 14) mit radial nach innen in Richtung einer Rotationsachse (1a) der Schiebemuffe (1) hervorstehenden Zähnen (8, 9, 21 a) der Verzahnung (2, 20, 21) und ein durch das innere Umfangsprofil (6, 12, 14) vorgegebenes äußeres Umfangsprofil (7, 13, 15) aufweist und wobei die Schaltgabelführung (26, 27) mit einer außerhalb des Körpers (5) um die Rotationsachse (1a) umlaufenden sowie seitlich begrenzten Ringnut (22, 23, 24) versehen ist, **dadurch gekennzeichnet, dass** die Schiebemuffe (1) einen einteiligen sowie umfangsseitig geschlossenen Stützring (3, 16, 17, 18, 19, 31) aus Stahl aufweist, wobei der Stützring (3, 16, 17, 18, 19, 31) außen auf dem hohlzylindrischen Körper (5) befestigt ist und dabei der Körper (5) außen von einem ringförmigen Abschnitt (3a, 16a, 17a, 18a, 19a) des Stützringes (3, 16, 17, 18, 19, 31) mit einer konstanten radialen Wanddicke zu mindestens 4/5 längs der Rotationsachse (1a) abgedeckt sowie umfangsseitig umgriffen ist.

2. Schiebemuffe nach Anspruch 1, **dadurch gekennzeichnet, dass** die Wanddicke des Abschnitts (16a) mindestens der Zahnhöhe eines der Zähne (21a) der Verzahnung (21) entspricht, wobei die Zahnhöhe die halbe Differenz aus dem größten Durchmesser des Fußkreises und aus dem kleinsten Durchmesser des Kopfkreises des höchsten der Zähne (21 a) der Verzahnung (21) ist.

3. Schiebemuffe nach Anspruch 1, **dadurch gekennzeichnet, dass** die Schaltgabelführung (27) eine in den Stützring (3, 17, 18, 19) geformte sowie radial nach außen geöffnete Ringnut (23, 24) aufweist.

4. Schiebemuffe nach Anspruch 3, **dadurch gekennzeichnet, dass** der Stützring (31) aus einem ringförmigen Rohling (30) kaltgeformt ist, wobei der größte Außendurchmesser des Rohlings (30) zumindest kleiner als der kleinste Außendurchmesser an dem fertigen Stützring (31) ist.

5. Schiebemuffe nach Anspruch 3, **dadurch gekennzeichnet, dass** radial zwischen der Ringnut (22) und dem hohlzylindrischen Körper (5) ein ringförmiger Wandabschnitt (16a) an dem Stützring (16) um die Rotationsachse (1a) umlaufend mit einer radialen Wandstärke von mindestens 2,5 mm verbleibt.

6. Schiebemuffe nach Anspruch 3, **dadurch gekennzeichnet, dass** radial zwischen der Ringnut (22, 23, 24) und dem hohlzylindrischen Körper (5) ein ringförmiger Wandabschnitt (3a, 16a, 17a, 18a, 19a) an dem Stützring (3, 16, 17, 18, 19) verbleibt und dass die radiale Wandstärke des Abschnittes (3a, 16a, 17a, 18a, 19a) um die Rotationsachse (1a) umlaufend mindestens dem zweifachen Wert einer Blechdicke des hohlzylindrischen Körpers (5) in seinem Ausgangszustand vor dem Formen des inneren Umfangsprofils (6, 12, 14) sowie des äußeren Umfangsprofils (7, 13, 15) entspricht.

7. Schiebemuffe nach Anspruch 1, **dadurch gekennzeichnet, dass** der Stützring (3) mittels eines Presssitzes auf dem hohlzylindrischen Körper (5) befestigt ist.

8. Schiebemuffe nach Anspruch 7, **dadurch gekennzeichnet, dass** der Presssitz mit wenigstens einer Schweißnaht (29) gesichert ist.

9. Schiebemuffe nach Anspruch 1, **dadurch gekennzeichnet, dass** der Stützring (3) und der hohlzylindrische Körper (5) mittels wenigstens einer Schweißnaht (29) aneinander befestigt sind.

10. Schiebemuffe nach einem der vorhergehenden Ansprüche, **dadurch gekennzeichnet, dass** der hohlzylindrische Körper (5) aus einem kreisrund gebogenen Blechstreifen (4) gebildet ist, wobei der Blechstreifen (4) in einem flachen Ausgangszustand so profiliert ist, dass der kreisrund um die Rotationsachse (1a) gebogene Blechstreifen (4) das innere Umfangsprofil (6, 12, 14) und das äußeres Umfangsprofil (7, 13, 15) aufweist.

11. Schiebemuffe nach Anspruch 10, **dadurch gekennzeichnet, dass** die aufeinander zugeführten Enden (4a, 4b) des ringförmig um die Rotationsachse (1a) gebogenen Blechstreifens (4) aneinander befestigt sind.

## Claims

1. Sliding sleeve (1) comprising a gearing (2, 20, 21) made by cold-shaping on a thin-walled hollow cylindrical body (5) of sheet metal and a gearshift fork guide (26, 27), said body (5) comprising an inner peripheral profile (6, 12, 14) with teeth (8, 9, 21 a) of the gearing (2, 20, 21) projecting radially inward toward an axis of rotation (1a) of the sliding sleeve (1), said body (5) further comprising an outer peripheral profile (7, 13, 15) pre-defined by the inner peripheral profile (6, 12, 14), and the gearshift fork guide (26, 27) being provided with a laterally delimited annular groove (22, 23, 24) extending outside of said body (5) about the axis of rotation (1a), **characterised in that** the sliding sleeve (1) comprises a circumferentially closed, one-piece support ring (3, 16, 17, 18, 19, 31) made of steel that is fixed on the outside of the hollow cylindrical body (5), at least 4/5 of the length of the body (5) in the direction of the axis of rotation (1 a) is covered on the outside by an annular portion (3a, 16a, 17a, 18a, 19a) of the support ring (3, 16, 17, 18, 19, 31) having a constant radial wall thickness, and the body (5) is also surrounded in peripheral direction by the annular portion (3a, 16a, 17a, 18a, 19a).

2. Sliding sleeve according to claim 1, **characterised in that** the wall thickness of the portion (16a) corresponds at least to the tooth height of one of the teeth (21 a) of the gearing (21), the tooth height being equal to half the difference between the largest diameter of the root circle and the smallest diameter of the tip circle of the highest of the teeth (21 a) of the gearing (21).

3. Sliding sleeve according to claim 1, **characterised in that** the gearshift fork guide (27) is an annular groove (23, 24) that is formed in the support ring (3, 17, 18, 19) and is open radially towards the outside.

4. Sliding sleeve according to claim 3, **characterised in that** the support ring (31) is made by cold-shaping out of an annular blank (30), the largest outer diameter of the blank (30) being at least smaller than the smallest outer diameter of the finished support ring (31).

5. Sliding sleeve according to claim 3, **characterised in that** an annular wall portion (16a) having a radial wall thickness of at least 2.5 mm and extending about the axis of rotation (1 a) remains on the support ring (16) radially between the annular groove (22) and the hollow cylindrical body (5).

6. Sliding sleeve according to claim 3, **characterised in that** an annular wall portion (3a, 16a, 17a, 18a, 19a) remains on the support ring (3, 16, 17, 18, 19) radially between the annular groove (22, 23, 24) and the hollow cylindrical body (5), the radial wall thickness of the portion (3a, 16a, 17a, 18a, 19a) extending about the axis of rotation (1a) corresponds to at least twice the value of a sheet metal thickness of the hollow cylindrical body (5) in its initial state prior to the forming of the inner peripheral profile (6, 12, 14) and the outer peripheral profile (7, 13, 15).

7. Sliding sleeve according to claim 1, **characterised in that** the support ring (3) is fixed on the hollow cylindrical body (5) by a press fit.

8. Sliding sleeve according to claim 7, **characterised in that** the press fit is secured by at least one weld seam (29).

9. Sliding sleeve according to claim 1, **characterised in that** the support ring (3) and the hollow cylindrical body (5) are fixed to each other by at least one weld seam (29).

10. Sliding sleeve according to one of the preceding claims, **characterised in that** the hollow cylindrical body (5) is made out of a sheet metal strip (4) bent into a circular shape, the sheet metal strip (4) being profiled in an initial flat state in such a way that, when bent into a circular shape about the axis of rotation (1a), the sheet metal strip (4) comprises the inner peripheral profile (6, 12, 14) and the outer peripheral profile (7, 13, 15).

11. Sliding sleeve according to claim 10, **characterised in that** the brought-together ends (4a, 4b) of the sheet metal strip (4) that is bent into an annular shape about the axis of rotation (1 a) are fixed to each other.

## Revendications

1. Manchon coulissant (1) comprenant une denture (2, 20, 21) réalisée par formage à froid sur un corps cylindrique creux (5) à paroi mince en tôle, et un guide (26, 27) de fourchette de changement de vitesse, ledit corps (5) comprenant un profil périphérique intérieur (6, 12, 14) ayant des dents (8, 9, 21 a) de la denture (2, 20, 21) qui font radialement saille vers l'intérieur en direction d'un axe de rotation (1a) du manchon coulissant (1), ledit corps comprenant, en outre, un profil périphérique extérieur (7, 13, 15) qui est prédéfini par le profil périphérique intérieur (6, 12, 14), le guide (26, 27) de fourchette de changement de vitesse étant muni d'une rainure annulaire (22, 23, 24) qui s'étend en dehors du corps (5) autour de l'axe de rotation (1a) en étant latéralement délimitée, **caractérisé en ce que** le manchon coulissant (1) comprend un anneau (3, 16, 17, 18, 19, 31 ) monobloc de support en acier qui est fermé en direction périphérique et est fixé sur le côté extérieur du corps cylindrique creux (5), ce corps (5) étant recouvert à l'extérieur sur au moins 4/5 de sa longueur le long de l'axe de rotation (1a) par une partie annulaire (3a, 16a, 17a, 18a, 19a) de l'anneau de support (3, 16, 17, 18, 19, 31), laquelle partie annulaire a une épaisseur de paroi radiale constante et entoure le corps (5) en direction périphérique.

2. Manchon coulissant selon la revendication 1, **caractérisé en ce que** l'épaisseur de paroi de la partie (16a) correspond au moins à l'hauteur d'une des dents (21 a) de la denture (21), ladite hauteur de dent correspondant à la moitié de la différence entre le plus grand diamètre du cercle de pied et le plus petit diamètre du cercle de tête de la plus haute dent (21 a) de la denture (21).

3. Manchon coulissant selon la revendication 1, **caractérisé en ce que** le guide (27) de fourchette de changement de vitesse comprend une rainure annulaire (23, 24) qui est formée dans l'anneau de support (3, 17, 18, 19) et est radialement ouverte vers l'extérieur.

4. Manchon coulissant selon la revendication 3, **caractérisé en ce que** l'anneau de support (31) est formé à froid à partir d'une ébauche annulaire (30), le plus grand diamètre extérieur de l'ébauche (30) étant au moins inférieur au plus petit diamètre extérieur de l'anneau de support (31 ) fini.

5. Manchon coulissant selon la revendication 3, **caractérisé en ce que,** radialement entre la rainure annulaire (22) et le corps cylindrique creux (5), il reste sur l'anneau de support (16), une partie de paroi annulaire (16a) qui s'étend autour de l'axe de rotation (1a) et a une épaisseur radiale de paroi d'au moins 2,5 mm.

6. Manchon coulissant selon la revendication 3, **caractérisé en ce que** radialement entre la rainure annulaire (22, 23, 24) et le corps cylindrique creux (5), il reste sur l'anneau de support (3, 16, 17, 18, 19), une partie de paroi annulaire (3a, 16a, 17a, 18a, 19a), et **en ce que** l'épaisseur radiale de paroi de la partie (3a, 16a, 17a, 18a, 19a) s'étendant autour de l'axe de rotation (1a) correspond au moins à deux fois l'épaisseur de tôle du corps cylindrique creux (5) à son état de départ avant le formage du profil périphérique intérieur (6, 12, 14) et du profil périphérique extérieur (7, 13, 15).

7. Manchon coulissant selon la revendication 1, **caractérisé en ce que** l'anneau de support (3) est fixé sur le corps cylindrique creux (5) par engagement à la presse.

8. Manchon coulissant selon la revendication 7, **caractérisé en ce que** l'engagement à la presse est consolidé par au moins une soudure (29).

9. Manchon coulissant selon la revendication 1, **caractérisé en ce que** l'anneau de support (3) et le corps cylindrique creux (5) sont fixés, l'un à l'autre, par au moins une soudure (29).

10. Manchon coulissant selon l'une des revendications précédentes, **caractérisé en ce que** le corps cylindrique creux (5) est formé à partir d'un feuillard en tôle (4) cintré en forme circulaire qui est profilé à l'état plat de départ de telle façon que ledit feuillard (4) cintré en forme circulaire autour de l'axe de rotation (1a) comprend le profil périphérique intérieur (6, 12, 14) et le profil périphérique extérieur (7, 13, 15).

11. Manchon coulissant selon la revendication 10, **caractérisé en ce que** les deux extrémités (4a, 4b) réunies du feuillard en tôle (4) qui est cintré en forme annulaire autour de l'axe de rotation (1a) sont fixées, l'une à l'autre.
